# EUROPEAN PATENT APPLICATION

(11) **EP 1 847 929 A1**
(43) Date of publication of application: **24.10.2007**
(21) Application number: 07251574.5
(22) Date of filing: 12.04.2007
(51) Int. Cl.: G06F 9/46

(54) **Information processing device including manipulation task reservation function**

(30) Priority: 19.04.2006 JP 2006115364
(71) Applicant: ORION ELECTRIC CO., Ltd., Fukui 915-8555 (JP)
(72) Inventor: Shibata, Masaru, Fukui 915-8555 (JP)
(74) Representative: Paget, Hugh Charles Edward

(57) **Abstract**

The present invention provides an information processing device which can set a function execution request from a user to be automatically executed later in the case where the function execution request cannot be immediately processed due to a busy state of the device, and in particular, the information processing device including a manipulation task reservation function which has improved convenience of the user. In the case where the function execution request is made by the user and when determined that it cannot be executed because processing resources are being used by another function for instance, a task reservation process for automatically executing the function later is performed and confirmation of the reserved task contents and a change of the reserved contents are allowed so as to improve convenience of the user.

## Description

### BACKGROUND OF THE INVENTION

### Field of the Invention

The present invention relates to an information processing device capable of executing various functions, and in particular, to the information processing device having a manipulation task reservation function which can set a function execution request from a user to be automatically executed later in the case where the function execution request cannot be immediately processed due to a busy state of the device and the like.

### Description of the Related Art

An information processing device (such as a personal computer or a DVD recorder) is configured to be capable of executing various functions, and is capable of simultaneously executing multiple functions in many cases because of improvement in its processing power and control method. However, there may also be the functions which cannot be simultaneously executed while executing a certain function from the viewpoints of limitation on the processing power of the device, prevention of deadlock and the like.

For instance, there are the cases where the contents recorded on a DVD cannot be deleted in the middle of picture recording on the DVD with a recording and reproducing device such as the DVD recorder. In such cases, a user needs to perform an operation of a content deletion process again after finishing a picture recording process, which is cumbersome. Conventional technologies for such a problem are disclosed in Japanese Patent Laid-Open Publication No. 2002-298551 (Patent Document 1) and the like. In this connection, Japanese Patent Laid-Open Publication No. 2005-244551 (Patent Document 2), Japanese Patent Laid-Open Publication No. 2006-18958 (Patent Document 3) and the like include disclosures of conventional technologies relating to those which automatically erase the contents recorded on a recording medium such as the DVD.

As for the conventional technology disclosed by Patent Document 1, in the case where there is a request for rewriting of management information during a picture recording process or the like, it rewrites the management information on storage means different from a recording medium for recording contents and writing the management information, and automatically applies the rewriting of the management information to the recording medium after finishing the picture recording process . If this is applied to the problem, the process can be executed without forcing a cumbersome operation (double work) on a user, which is suitable. However, the user may take it that the process was executed in the stage of performing the operation (there is no consideration of notifying the user of the process contents) . Therefore, there are the cases where a variance arises between an actual state of the device and interpretation of the user so that there is danger of occurrence of a problem attributable thereto. For instance, in the case where the management information was not automatically rewritten to the recording medium after the picture recording process for some reason (such as power-down), there was danger of occurrence of the problem that the process which had already been executed according to the user remained unexecuted. There was a respite between a process execution request from a user and actual execution of the process. However, consideration was not given to a change and cancellation of the contents of a process request.

### SUMMARY OF THE INVENTION

In view of the above-mentioned points, an object of the present invention is to provide an information processing device which can set a function execution request from the user to be automatically executed later in the case where the function execution request cannot be immediately processed due to a busy state of the device and the like, and in particular, the information processing device including a manipulation task reservation function which has improved convenience of the user.

A first aspect of the present invention provides an information processing device including a manipulation task reservation function, comprising: an operating portion which is an interface to a user; a control portion for exerting control over the entire device and the like; a storage portion; processing resources for executing various functions; and an output portion, characterized in that a task reservation processing portion is provided so as to perform as follows when the user makes an execution request for any of the functions to the operating portion: in the case where the function for which the execution request has been made cannot be immediately executed because the processing resources are used for a different process from the execution request, the task reservation processing portion generates a message for seeking an instruction as to whether or not to make a task reservation for the sake of executing the function for which the execution request has been made later and outputs it from the output portion; in the case where the instruction from the user is to make a task reservation, it associates information indicating contents of the execution request with reserved task execution time information set by a predetermined condition or acquired from the user and stores the information in the storage portion; when a request for reference to reserved task contents is made according to the instruction to the operating portion from the user, the task reservation processing portion refers to the storage portion and obtains information on a reserved task to output it from the output portion; in the case where there is a request for a change of the reserved task contents from the user before the reserved task is executed, it updates pertinent reserved task information of the storage portion; and in the case where time set by the reserved task execution time information comes, it causes the reserved task to be executed.

According to the configuration, in the case where a function execution request from the user cannot be immediately executed because the processing resources of the device are used for another process, a task reservation is made to automatically execute this function later. In the case where there is a request for confirmation of the reserved contents, it is outputted. In the case where there is a request for a change of the reserved contents before execution of the reserved task, a reserved content updating process corresponding thereto is executed. The "task reservation processing portion" which mainly executes the processing may be either configured hardware-wise or configured by a program (and a control portion for executing it). The "output portion" may be either a display such as a monitor provided to the information processing device or an output terminal for outputting a signal to the monitor or the like connected as an external device. The "processing resources" is a concept which includes hardware and software (programs and files) for executing the various functions. The "'change' of the reserved task contents" is a concept which includes deletion (suspension) of the reserved task. The "predetermined condition" for setting the reserved task execution time information is the information preset (including setting by the user) on the device, which may be the information to the effect that "it is executed immediately after the processing resources become capable of executing the reserved task" or the information such as "it is executed a certain time (the "certain time" may be set by the user) after the processing resources become capable of executing the reserved task" for instance.

A second aspect of the present invention provides the information processing device including a manipulation task reservation function according to the first aspect, characterized in that it outputs a message for requesting resetting of a reserved task execution time from the output portion in the case where the reserved task execution time information is acquired from the user on asking the user for the instruction as to whether or not to make a task reservation and in the case where the task reservation processing portion determines that the processing resources cannot execute the reserved task at the time set by the reserved task execution time information, and it associates the reserved task execution time information with the information indicating the contents of the execution request and stores the information in the storage portion in the case where valid reserved task execution time information is acquired from the user.

According to the configuration, a reservation is made to perform some processing (execution of batch processing for instance) at the time set by the reserved task execution time information. Therefore, a message for prompting a change of the reserved task execution time is outputted when determined that the reserved task cannot be executed at the time. The "valid reserved task execution time information" is the information which indicates the time not falling under the time when the reserved task is determined to be unexecutable (information indicating the time when the reserved task is determined to be executable at least at the time the task reservation is made) as previously described.

A third aspect of the present invention provides the information processing device including a manipulation task reservation function according to the first or second aspect, characterized in that, in the case where the reserved task cannot be immediately executed in an execution process of the reserved task because the processing resources are used for a different process from the reserved task, it requests the user to reset the task reservation or automatically performs the execution process of the reserved task after the processing resources become capable of executing the reserved task, or stores error information in the storage portion and produces an output to the effect that the reserved task has failed to be executed when the request for reference to the reserved task contents is made by the user.

According to the configuration, in the case where it is determined that the reserved task cannot be executed because the processing resources are used for another process when the time set by the reserved task execution time information comes for instance, it performs the processes of requesting the user to reset the task reservation or automatically performing an execution process of the reserved task after the processing resources become capable of executing the reserved task, or storing error information and producing an output to the effect that the reserved task has failed to be executed when the request for reference to the reserved task contents is made by the user.

A fourth aspect of the present invention provides the information processing device including a manipulation task reservation function according to any one of the first to third aspects, characterized in that: the storage portion is composed of a nonvolatile memory; and in the case where the execution process of the reserved task is performed, it deletes the information on the reserved task stored in the nonvolatile memory or associates the information on the reserved task with information indicating that the task has been executed and stores the information in the nonvolatile memory; and in the case where the task reservation processing portion determines that, even though the time set by the reserved task execution time information has passed, the information on the reserved task exists in the nonvolatile memory or the information indicating that the task has been executed is not added to the information on the reserved task, it outputs a message indicating that the reserved task has not been executed from the output portion or stores that information as error information in the nonvolatile memory so as to output the message indicating that the reserved task has not been executed from the output portion when there is a display instruction from the user.

According to the configuration, in the case where the reserved task was not executed because the device was not fed for instance when the time set by the reserved task execution time information came, the information on the reserved task is not deleted or the information indicating that the task has been executed is not added. Therefore, it is possible to determine whether or not the reserved task has been executed. When determined that the reserved task has not been executed, it outputs the message indicating that the reserved task has not been executed or stores that information as error information in the nonvolatile memory so as to output the message indicating that the reserved task has not been executed when there is a display instruction from the user.

A fifth aspect of the present invention provides the information processing device including a manipulation task reservation function according to any one of the first to fourth aspects, characterized in that it includes a recording and reproducing device for recording or reproducing the contents for an information recording medium so that the processing resources are composed of the contents recorded in the recording and reproducing device or the information recording medium, and the execution request from the user is a request for a change or deletion of content information recorded in the information recording medium.

A sixth aspect of the present invention provides a manipulation task reservation processing program for causing the information processing device according to the first aspect to execute the steps of: when the user makes an execution request for any of the functions to the operating portion, determining whether or not the function for which the execution request has been made can be immediately executed; when determined not to be immediately executable, generating a message for seeking an instruction as to whether or not to make a task reservation for the sake of executing the function for which the execution request has been made later and outputting it from the output portion; in the case where the instruction from the user thereby acquired is to make a task reservation, associating information indicating contents of the execution request with reserved task execution time information set by a predetermined condition or acquired from the user and storing the information in the storage portion; when a request for reference to reserved task contents is made according to the instruction to the operating portion from the user, referring to the storage portion and obtaining information on the reserved task to output it from the output portion; in the case where there is a request for a change of the reserved task contents from the user before the reserved task is executed, updating pertinent reserved task information of the storage portion; and in the case where time set by the reserved task execution time information comes, causing the reserved task to be executed.

A seventh aspect of the present invention provides a manipulation task reservation processing method for a manipulation task of an information processing device comprising: an operating portion which is an interface to a user; a control portion for exerting control over the entire device and the like; a storage portion; processing resources for executing various functions; and an output portion, characterized in that: when the user makes an execution request for any of the functions to the operating portion, if the function for which the execution request has been made cannot be immediately executed because the processing resources are executing a different process from the execution request, it generates a message for seeking an instruction as to whether or not to make a task reservation for the sake of executing the function for which the execution request has been made later and outputs it from the output portion; in the case where the instruction from the user is to make a task reservation, it associates information indicating contents of the execution request with reserved task execution time information set by a predetermined condition or acquired from the user and stores the information in the storage portion; when the user makes a request for reference to reserved task contents, it refers to the storage portion and obtains information on a reserved task to output it from the output portion; in the case where there is a request for a change of the reserved task contents from the user before the reserved task is executed, it updates pertinent reserved task information of the storage portion; and in the case where time set by the reserved task execution time information comes, it causes the reserved task to be executed.

According to the first aspect of the present invention, an information processing device including a manipulation task reservation function comprises: an operating portion which is an interface to a user; a control portion for exerting control over the entire device and the like; a storage portion; processing resources for executing various functions; and an output portion, and is characterized in that a task reservation processing portion is provided so as to perform as follows when the user makes an execution request for any of the functions to the operating portion: in the case where the function for which the execution request has been made cannot be immediately executed because the processing resources are used for a different process from the execution request, the task reservation processing portion generates a message for seeking an instruction as to whether or not to make a task reservation for the sake of executing the function for which the execution request has been made later and outputs it from the output portion; in the case where the instruction from the user is to make a task reservation, it associates information indicating contents of the execution request with reserved task execution time information set by a predetermined condition or acquired from the user and stores the information in the storage portion; when a request for reference to reserved task contents is made according to the instruction to the operating portion from the user, the task reservation processing portion refers to the storage portion and obtains information on a reserved task to output it from the output portion; in the case where there is a request for a change of the reserved task contents from the user before the reserved task is executed, it updates pertinent reserved task information of the storage portion; and in the case where time set by the reserved task execution time information comes, it causes the reserved task to be executed. According to the information processing device, in the case where a function execution request from the user cannot be immediately executed, a task reservation is made to execute this function later. As the process for which the execution request has been made is automatically executed when the reserved time comes, convenience of the user is excellent. Furthermore, in the case where there is a request for confirmation of the reserved contents, it is outputted. In the case where there is a request for a change of the reserved contents before execution of the reserved task, a reserved content updating process corresponding thereto is executed. Thus, the convenience of the user is further improved.

According to the second aspect of the present invention, the information processing device including a manipulation task reservation function according to the first aspect is characterized in that it outputs a message for requesting resetting of a reserved task execution time from the output portion in the case where the reserved task execution time information is acquired from the user on asking the user for the instruction as to whether or not to make a task reservation and in the case where the task reservation processing portion determines that the processing resources cannot execute the reserved task at the time set by the reserved task execution time information, and it associates the reserved task execution time information with the information indicating the contents of the execution request and stores the information in the storage portion in the case where valid reserved task execution time information is acquired from the user. According to the information processing device, in the case where a reservation is made to perform some processing (execution of batch processing for instance) at the time set by the reserved task execution time information and so it is determined that the reserved task cannot be executed at the time for instance, a message for prompting a change of the reserved task execution time is outputted. Therefore, it is possible to more securely execute the process requested by the user at the time desired by the user.

According to the third aspect of the present invention, the information processing device including a manipulation task reservation function according to the first or second aspect is characterized in that, in the case where the reserved task cannot be immediately executed in an execution process of the reserved task because the processing resources are used for a different process from the reserved task, it requests the user to reset the task reservation or automatically performs the execution process of the reserved task after the processing resources become capable of executing the reserved task, or stores error information in the storage portion and produces an output to the effect that the reserved task has failed to be executed when the request for reference to the reserved task contents is made by the user. According to the information processing device, if determined that the reserved task cannot be executed because the processing resources are used for a different process when the time set by the reserved task execution time information comes, it requests the user to reset the task reservation or automatically performs the execution process of the reserved task after the processing resources become capable of executing the reserved task, or stores error information and produces an output to the effect that the reserved task has failed to be executed when the request for reference to the reserved task contents is made by the user. Therefore, convenience of the user is excellent in that, even in the case where the process has failed to be executed per reservation, the user can recognize it.

According to the fourth aspect of the present invention, the information processing device including a manipulation task reservation function according to any one of the first to third aspects is characterized in that: the storage portion is composed of a nonvolatile memory; and in the case where the execution process of the reserved task is performed, it deletes the information on the reserved task stored in the nonvolatile memory or associates the information on the reserved task with information indicating that the task has been executed and stores the information in the nonvolatile memory; and in the case where the task reservation processing portion determines that, even though the time set by the reserved task execution time information has passed, the information on the reserved task exists in the nonvolatile memory or the information indicating that the task has been executed is not added to the information on the reserved task, it outputs a message indicating that the reserved task has not been executed from the output portion or stores that information as error information in the nonvolatile memory so as to output the message indicating that the reserved task has not been executed from the output portion when there is a display instruction from the user. According to the information processing device, in the case where the reserved task was not executed because the device was not fed for instance at the time set by the reserved task execution time information, it is possible to determine this state. If determined that the reserved task has not been executed, it outputs a message indicating that the reserved task has not been executed or stores that information as error information in the nonvolatile memory so as to output the message indicating that the reserved task has not been executed when there is a display instruction from the user. Therefore, it is possible to prevent occurrence of a problem that the process which the user thinks already executed is left unexecuted.

### BRIEF DESCRIPTION OF THE DRAWINGS

FIG. 1 is a block diagram showing an overview of only a part of a PC mainly related to the present invention;
FIG. 2 is a diagram showing an example of a configuration of a reserved task table;
FIG. 3 is a flowchart showing an overview of a process relating to the present invention when there is a file operation request;
FIG. 4 is a flowchart showing an overview of a reserved task execution process;
FIG. 5 is a diagram showing an example of a display screen (reserved task indication screen);
FIG. 6 is a diagram showing an example of the display screen (reserved task list display screen);
FIG. 7 is a diagram showing an example of the display screen (reserved task deletion confirmation screen);
FIG. 8 is a block diagram showing an overview of only the part of a TV with a built-in DVD mainly related to the present invention;
FIG. 9 is a diagram showing an example of the configuration of the reserved task table of a second embodiment;
FIG. 10 is a flowchart showing an overview of the process relating to the present invention when there is a request to operate the DVD;
FIG. 11 is a flowchart showing an overview of the execution process of the reserved task of the second embodiment;
FIG. 12 is a diagram showing an example of the display screen (task execution time setting screen);
FIG. 13 is a diagram showing an example of the display screen (reserved task list display screen);
FIG. 14 is a flowchart showing an overview of another reserved task execution process;
FIG. 15 is a flowchart showing an overview of a further reserved task execution process; and
FIG. 16 is a block diagram showing an overview of only the part of another PC mainly related to the present invention.

### DETAILED DESCRIPTION OF THE PREFERRED EMBODIMENTS

Hereunder, concrete embodiments of the present invention will be described with reference to the drawings. The following embodiments are just the forms for embodying the present invention, and are not intended to limit the present invention within the scope thereof.

### [First Embodiment]

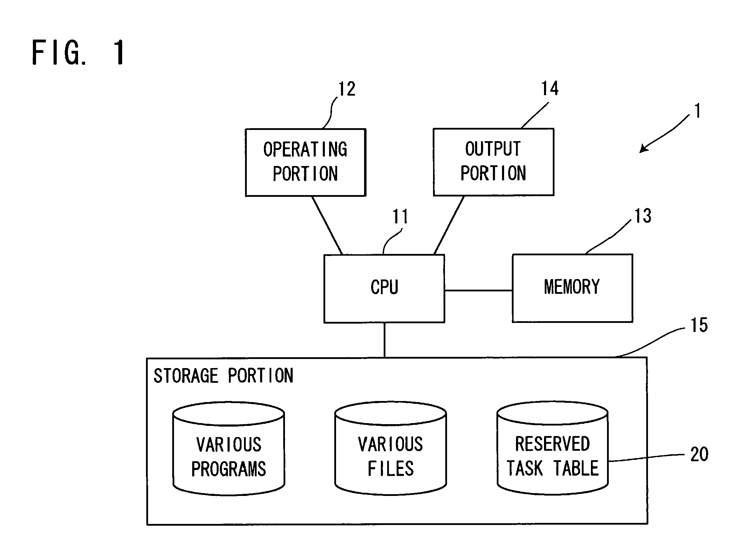

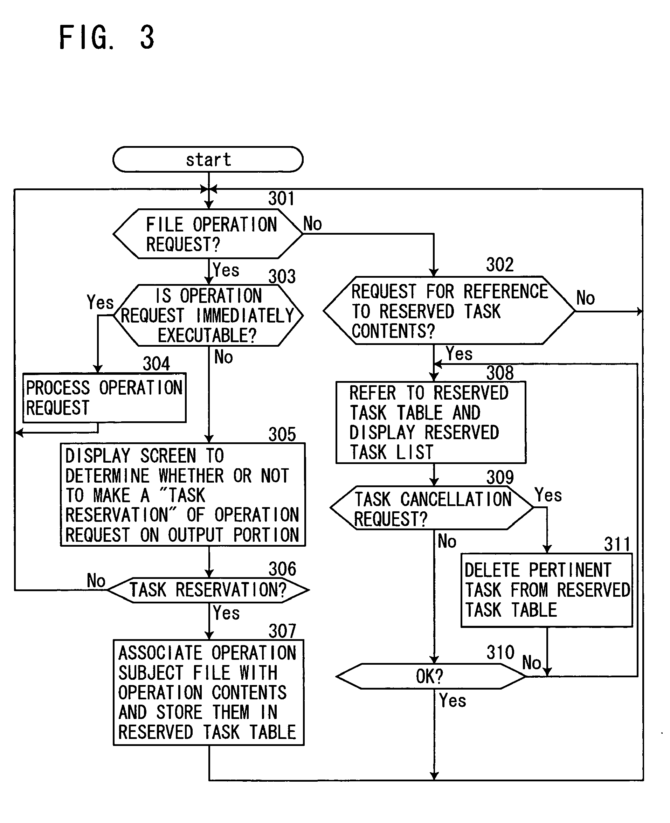

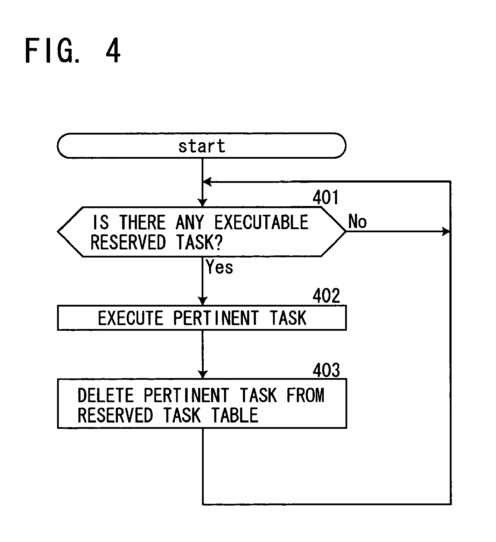

FIG. 1 is a block diagram showing an overview of only the part of a personal computer (an example of an information processing device, merely a PC hereafter) in this embodiment mainly related to the present invention. FIGS. 3 and 4 are flowcharts showing only an overview of operations of the part of the PC relating to the present invention.

As shown in FIG. 1, a PC 1 of this embodiment includes a CPU 11 as a control portion for controlling the entire device, performing arithmetic processing and the like, an operating portion 12 which is an input interface to a user (a keyboard, mouse or the like), an output portion 14 which is an output interface (a monitor or the like), a memory 13 for temporarily accumulating information, a storage portion 15 and the like. The storage portion 15 has programs for executing various functions and various files (such as document files) accumulated therein, where the CPU 11 for executing the programs, various files, memory 13 and the like fall under "processing resources for executing various functions." A "task reservation processing portion" is composed of a program for executing a process indicated below, the CPU 11 for executing it and the storage portion 15 including a reserved task table described below.

Next, an overview of the processing of the PC 1 relating to the present invention will be described with reference to FIGS. 3 and 4. FIG. 3 is a flowchart showing an overview of the processing relating to the present invention when there is a file operation request (such as a file deletion request) to the PC 1.

In the case where there is the file operation request to the PC 1 (step 301), it determines whether or not the operation request is immediately executable (step 303). If immediately executable, it executes the process (step 304). "Whether or not the operation request is immediately executable" is intended to determine the cases where the processing resources (CPU 11, various files and the like) for executing various functions are used for another process and so the operation request cannot be processed. For instance, in the case where the user requests deletion of a file A while the file A is used by another program (operations for the file A are limited by the other program), it is determined that "the operation request is not immediately executable."

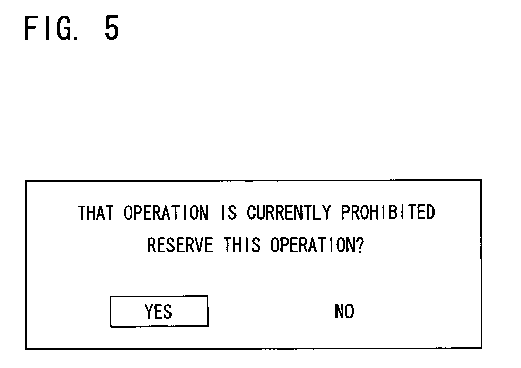

In the case where the determination in the step 303 is negative (the operation request is not immediately executable), it displays a screen (such as the screen shown in FIG. 5) for prompting a determination on whether or not to make a "task reservation" of the operation request on the output portion 14 (step 305). The "task reservation" is intended to automatically execute the process (task) of the operation request determined not to be immediately executable later. In this embodiment, the reserved task is automatically executed when determined to be in an executable state.

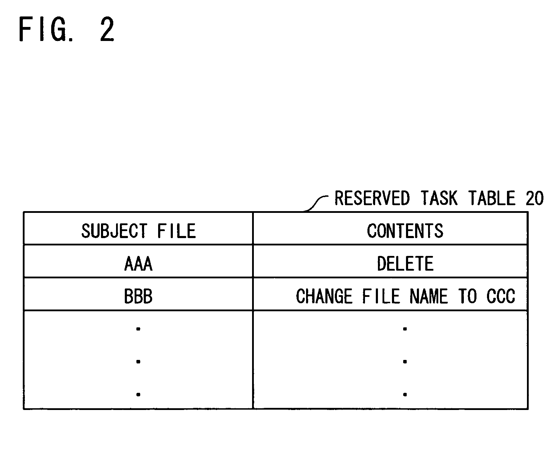

In the case where the user gives an instruction to perform the task reservation (step 306), it associates the contents of the operation request with information indicating a subject file and stores the information in the reserved task table to store it in the storage portion 15 (FIG. 2 shown an example of a configuration of the reserved task table). In the case where there is an instruction not to perform the task reservation, it returns to the step 301 as-is to repeat the following processing.

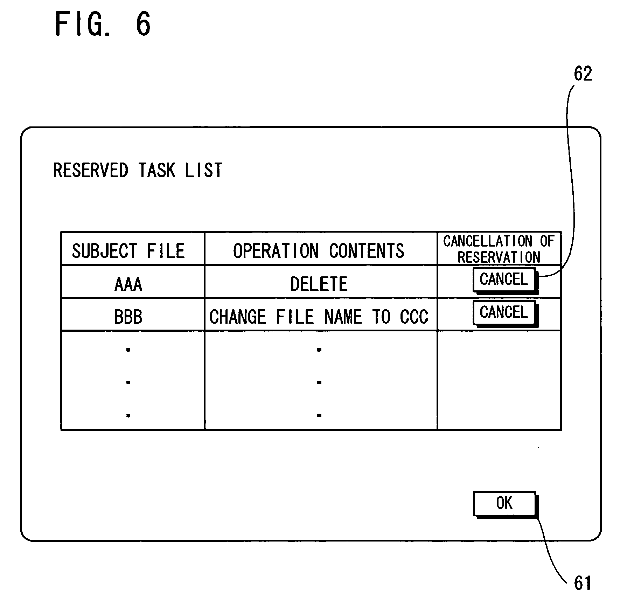

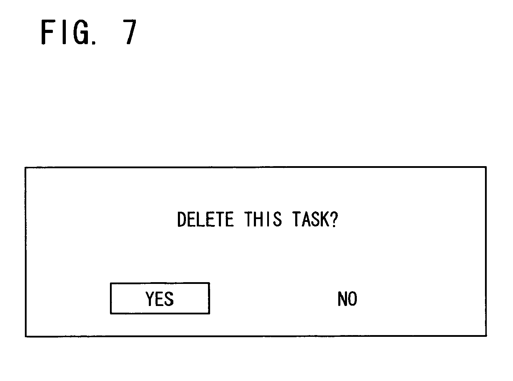

In the case where the user makes a request for reference to the reserved task contents (step 302), it refers to a reserved task table 20 of the storage portion 15 so as to display a reserved task list display screen as shown in FIG. 6 on the output portion 14 (step 308). In the case where the user refers to the screen and determines not to execute the task reservation, a cancellation button 62 of the pertinent task is inputted (a click operation using the mouse (operating portion 12) or the like) . In the case where the input is performed (step 309), a confirmation screen as shown in FIG. 7 is displayed on the output portion 14, and the pertinent task is deleted from the reserved task table 20 and stored in the storage portion 15 (step 311) so as to return to the step 308 and update the reserved task list display screen (a task thereby deleted is removed from the list). In the case where an OK button 61 is inputted (step 310), the display process of the reserved task list display screen is finished to return to the step 301 and repeat the processing from then on.

FIG. 4 is a flowchart showing an overview of a reserved task execution process.

In a step 401, it determines whether or not there is a reserved task which has become executable among those set in the reserved task table 20 of the storage portion 15. The determination is the same concept as the aforementioned step 303. For instance, in the case where a deletion process of a file AAA is task-reserved when a deletion request of the file AAA is not immediately executable because it is being used by another program, it is determined whether or not the use of the file AAA by the other program is finished (whether or not the processing resources have become available) in the step 401. When determined that the reserved task is executable because the processing resources have become available, it moves on to the step 402 to execute the task which is now executable.

In a subsequent step 403, the executed task is deleted from the reserved task table 20 and stored in the storage portion 15. And it returns to the step 401 to repeat the above processing thereafter.

As described above, in the case where the function execution request from the user is not immediately executable because the processing resources are being used for execution of another function, the PC 1 of this embodiment makes a task reservation for executing the function later so as to automatically execute the process for which the execution request has been made when the processing resources become available. Therefore, the convenience of the user is excellent. Furthermore, in the case where there is a request for confirmation of the reserved task contents, it is outputted to allow execution of the reserved task to be cancelled before the execution thereof. Thus, the convenience of the user is further improved.

This embodiment was described by using the operation request (such as a deletion request) for a file as an example. It is also possible, for instance, to effectively apply the present invention to the case where the function requested by the user is not executable during execution of another function due to limitation on processing power of the hardware (in such a case, it is also possible, for instance, to have a loaded condition of the hardware (processing resources) monitored and process the task reservation when the load of the hardware is exceeding a predetermined value).

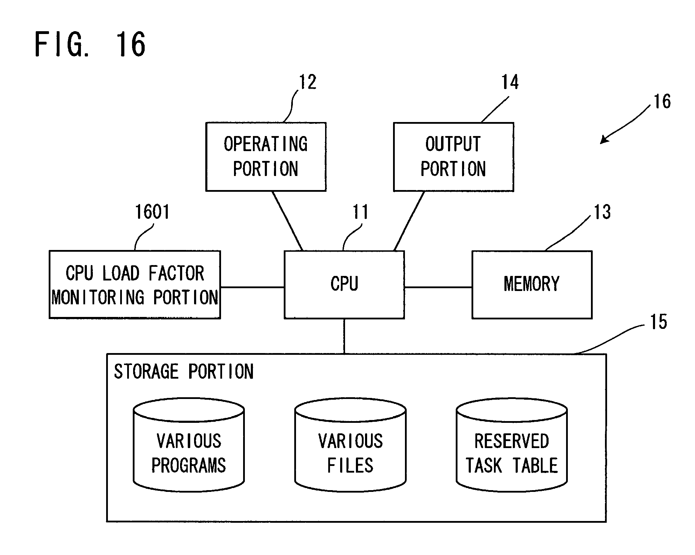

FIG. 16 shows a PC 16 including a CPU load factor monitoring portion 1601 for monitoring the loaded condition of the CPU 11 (a ratio of a transaction amount to the processing power of the CPU 11 for instance) (the same components as FIG. 1 are given the same symbols). In such a configuration, it is determined "whether or not the loaded condition of the CPU 11 obtained by the CPU load factor monitoring portion 1601 is exceeding a predetermined value (predetermined and stored in the storage portion 15)" in the process of the step 303 of FIG. 3. If determined that the predetermined value is exceeded, the task reservation process from the step 305 onward may be executed to limit execution of a new process (a process according to the operation request from the user) in the case where the load factor of the CPU 11 is exceeding the predetermined value. It is possible, by taking such a process, to prevent occurrence of a situation where delay of the processing exponentially increases due to a vicious circle in which transactions are further added when the processing resources are in an overloaded state and the load further increases. It is also possible to store a loading amount (it may be an average value or an estimate) generated by each individual process (process according to the operation request from the user) in the storage portion 15 in advance and utilize this to determine "whether or not the loaded condition of the CPU 11 exceeds the predetermined value if the process of the operation request is executed" in the process of step 303 of FIG. 3. Thus, it is determined whether or not there is limitation on the process according to the loading amount of the executed process (process according to the operation request from the user) . It is thereby possible to more efficiently "prevent the processing resources from getting in the overloaded state." Here, the portion for monitoring the CPU load factor was shown as an example. It is also possible, however, to provide a "processing resource monitoring portion" for monitoring the other processing resources and perform the process of the same concept as above.

According to this embodiment, the "task reservation processing portion" is composed of the program for executing the process described above, the CPU for executing it and the like. However, the "task reservation processing portion" may also be composed (hardware-wise) of a dedicated circuit configuration or the like.

### [Second Embodiment]

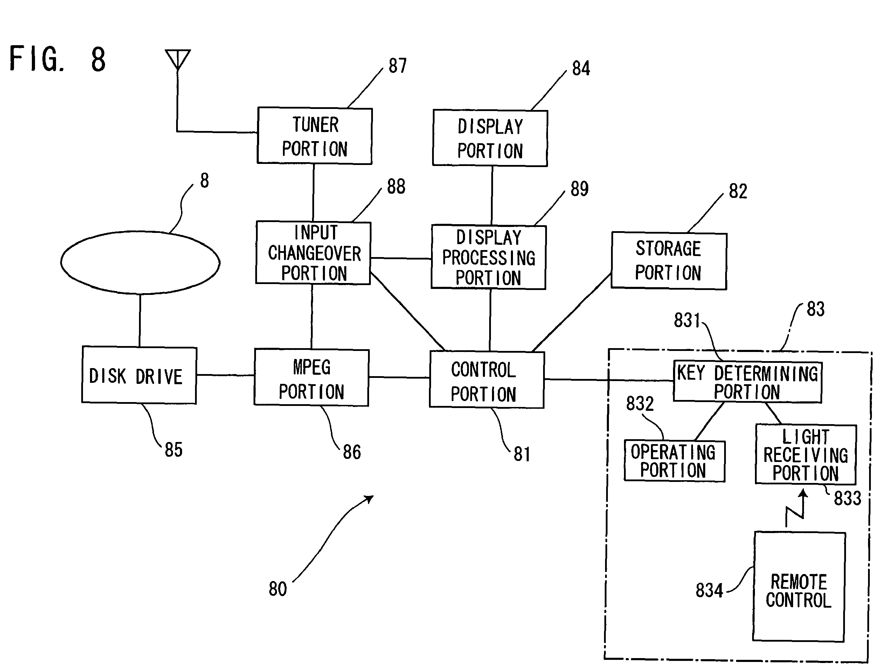

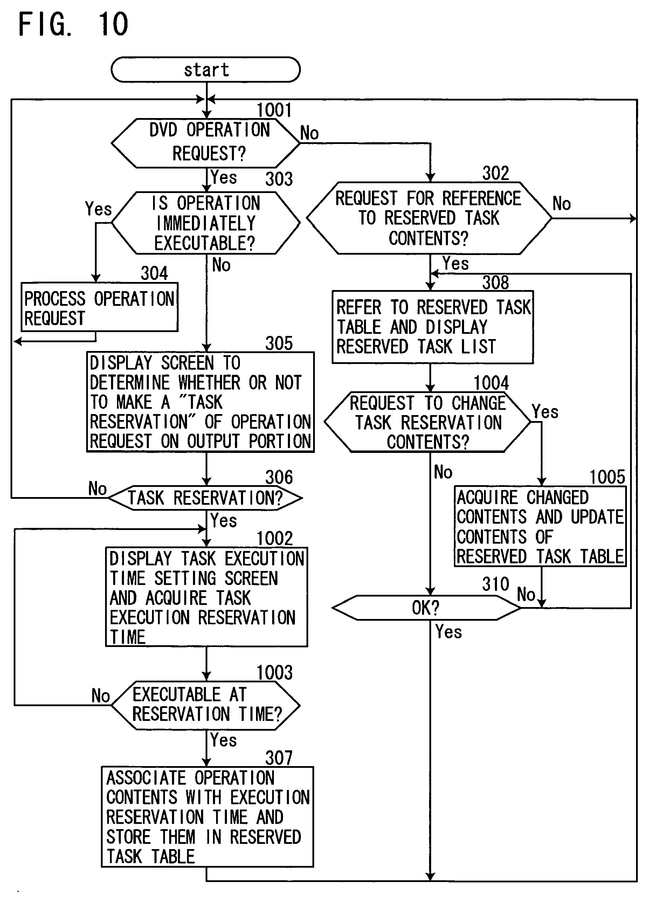

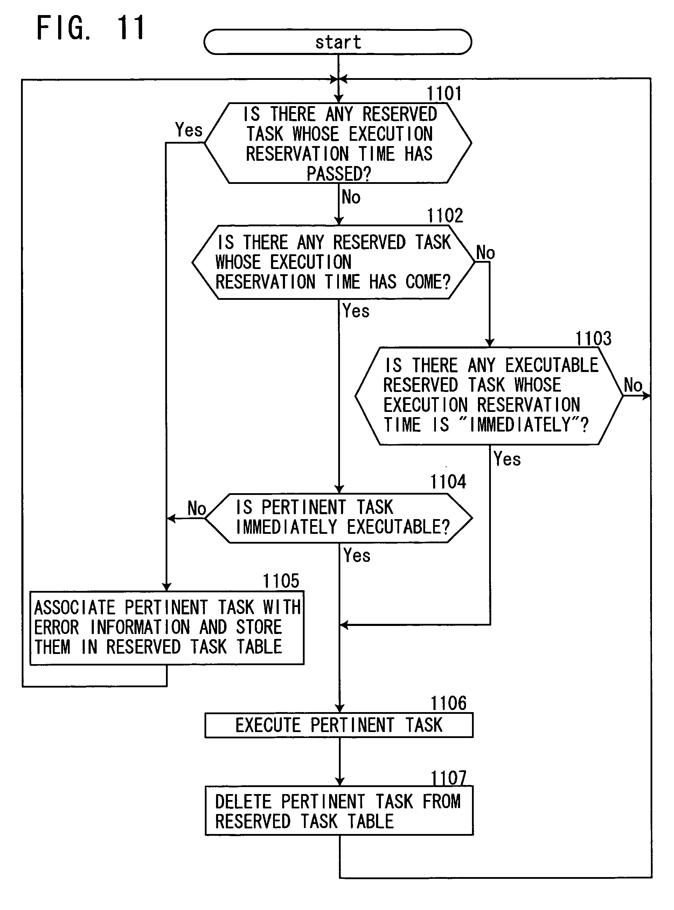

FIG. 8 is a block diagram showing an overview of only the part of a graphic display device with a built-in a DVD recording and reproducing device (an example of the information processing device, merely a TV with a built-in DVD hereafter) of this embodiment mainly related to the present invention. FIGS. 10 and 11 are flowcharts showing an overview of operations of the part of the TV with a built-in DVD relating to the present invention.

As shown in FIG. 8, a TV with a built-in DVD 80 includes a control portion 81 for controlling the entire device and performing various arithmetic processing and the like, a storage portion 82 composed of a nonvolatile memory, a disk drive 85 for performing reading or writing of a signal from a DVD 8 which is an information recording medium, an MPEG portion 86 for performing an encoding process and a decoding process according to the MPEG standards, a tuner portion 87 for receiving a broadcast wave, an input changeover portion 88 for performing switching of an input signal and the like, a display 84 for displaying video, a display processing portion 89 for performing a display process of video on the display 84 and the like, an operating portion 83 which is an input interface to a user (composed of a body operating portion 832, a remote-control device 834, a light receiving portion 833 for receiving a signal from the remote-control device 834, a key determining portion 831 for determining and outputting a signal from the body operating portion 832 or the light receiving portion 833) and the like.

Hereunder, the concept of the present invention will be described by using the operations for the DVD 8 (such as a deletion operation of a title recorded on the DVD 8 and a formatting operation of the DVD 8) as an example. As for the "processing resources" of this embodiment, the control portion 81, the MPEG portion 86, the disk drive 85, the contents recorded on the DVD 8 and the like fall under them. The "task reservation processing portion" is composed of the program for executing the processing described below, the control portion 81 for executing it, the storage portion 82 including the reserved task table, and the like.

Next, a description will be given with reference to FIGS. 10 and 11 as to an overview of the process of the TV with a built-in DVD 80 relating to the present invention. FIG. 10 is a flowchart showing an overview of the process relating to the present invention when the TV with a built-in DVD 80 receives a request to operate the DVD 8. The same symbols are used for those of the same process concept as the first embodiment (FIG. 3) so as to omit or simplify the description here.

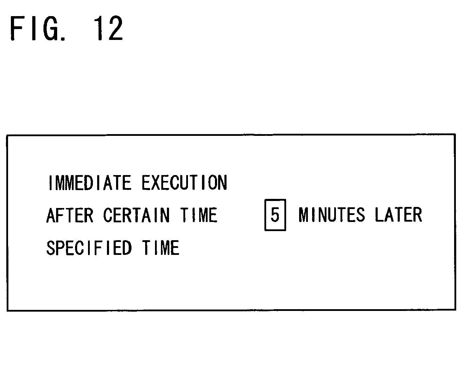

In the case where a DVD operation request is made by the user by operating the operating portion 83 (step 1001) and when determined that the operation request cannot be immediately processed (the case where the processing resources are being used by another function, such as the case where the recording process for the DVD 8 is being executed for instance) (step 303), the same screen as the first embodiment (FIG. 5) is displayed on the display 84 (step 305). In response, if there is an instruction to make a task reservation from the user (step 306), the screen for prompting setting of a task execution time as shown in FIG. 12 is displayed on the display 84 to acquire a task execution reservation time (step 1002). As for the setting of the task execution reservation time according to this embodiment, it is possible, as shown in FIG. 12, to select one out of execution immediately after the processing resources become available (immediate execution), execution a certain time after the processing resources become available (after a certain time), and directly specifying the execution time (specified time).

In the step 1003, it determines whether or not the task is executable at the task execution reservation time acquired in the step 1002. If determined not to be executable, it returns to the step 1002 and asks the user to reset the task execution reservation time (in this case, it may display a message, such as "this process cannot be executed at the set reservation time"). To "determine whether or not the task is executable at the task execution reservation time" means, for instance, to determine that a title deletion process cannot be executed at the task execution reservation time in the case where the reserved task is the deletion process of the title recorded on the DVD 8 and reserved recording is set at the set task execution reservation time on a device which prohibits the title deletion process during a recording process for instance. This is the case where the user is asked to reset the task execution reservation time when it is known in advance that the processing resources perform another process and it is thereby determined that the reserved task is not executable at the reserved time.

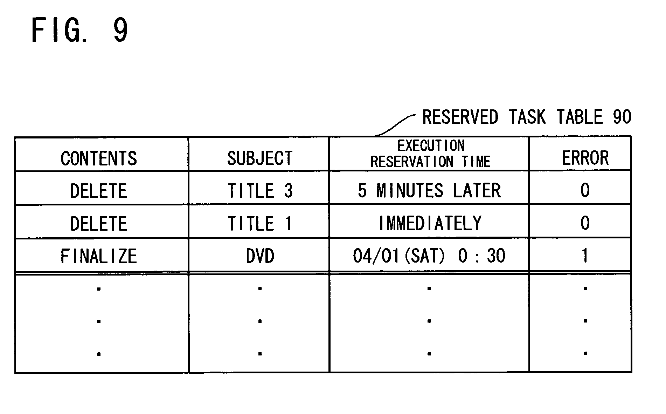

In the case where a valid task execution reservation time is acquired by the processing of the steps 1002 to 1003, it associates the contents of the DVD operation request with the task execution reservation time and stores them in the reserved task table to store them in the storage portion 82 (step 307). FIG. 9 shows an example of the configuration of the reserved task table. The reserved task table may also be recorded on the information recording medium (the DVD in this embodiment).

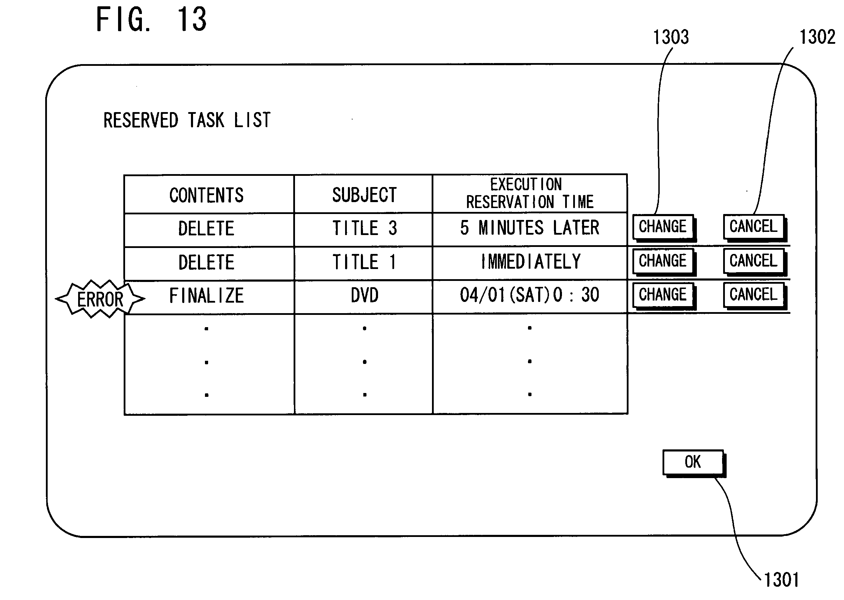

In the case where the user makes a request for reference to the reserved task contents (step 302), it refers to a reserved task table 90 so as to display the reserved task list display screen as shown in FIG. 13 on the display 84 (step 308). In the case where the user refers to and finds any of the reserved contents that should be changed, the user changes the set contents (corrects 5 minutes later to 7 minutes later for instance) and inputs a change button 1303. Thus, it moves on to a step 1005 (step 1004) and obtains the changed contents to update the contents of the reserved task table 90. In the case where the operation of the user is the input of a cancellation button 1302, it moves on to a step 1005 (step 1004) and deletes the pertinent task from the reserved task table 90 to store it in the storage portion 15. In the case where there is an input of an OK button 1301 (step 310), it finishes the display process of the reserved task list display screen and returns to the step 1001 to repeat the above processing thereafter. In the case where there is the reserved task associated with error information (task not executed as scheduled) in the execution process of the reserved task described below, it displays a warning to the effect that there has been an error as shown in FIG. 13.

FIG. 11 is a flowchart showing an overview of the execution process of the reserved task.

In the step 1101, it determines whether or not there is a task of which execution reservation time has already passed with no error information added among the reserved tasks set in the reserved task table 90 of the storage portion 82. If there is none, it determines whether or not there is the reserved task to be executed in steps 1102 and 1103.

In the step 1102, it determines whether or not there is a task of which execution reservation time is specified (including the one to be executed a certain time after the processing resources become available) and has come. If there is such a task, it moves on to a step 1104 and determines whether or not the pertinent task is immediately executable (same concept as the step 303). If determined not to be immediately executable, it moves on to a step 1105 and associates the pertinent task with the error information ("1" in this embodiment) to store it in the reserved task table 90.

In the step 1103, it determines whether or not there is a task which was set to be "executed immediately after the processing resources become available" and has become executable (same concept as the step 401 of the first embodiment (FIG. 4)). In the case where the determination in the step 1104 is positive or the determination in the step 1103 is positive, the task is executed and the reserved task table 90 is updated in steps 1106 to 1107 (same concept as the steps 402 to 403 of the first embodiment (FIG. 4)).

In the case where the determination in the step 1101 is positive (there is a task of which execution reservation time has already passed with no error information added), it moves on to a step 1105 and associates the pertinent task with the error information to store it in the reserved task table 90. Under normal circumstances, the task of which execution reservation time has come is monitored in the step 1102 to execute (or add the error information to) the task of which execution time has come (step 1106). Therefore, there should be no task of which execution reservation time has passed with no error information added. However, the above may happen in the case where the device was not fed at the pertinent time for instance. Thus, this process is intended to securely detect that the reserved task was not executed even in such a case.

As described above, the TV with a built-in DVD 80 of this embodiment outputs the message for prompting a change of the task execution reservation time in the case where performance of some process is already reserved at the time set by the task execution reservation time for instance and it is determined that no reserved task is executable at the time. Therefore, it is possible to execute the process requested by the user more securely at the time desired by the user. In the case where it is determined that the reserved task cannot be executed because the processing resources are used for another process when the task execution reservation time comes for instance, it correspondingly stores the error information and produces an output to the effect that the reserved task has failed to be executed when the request for reference to the reserved task contents is made by the user. Therefore, the convenience of the user is excellent in that, even in the case where the process has failed to be executed per reservation, the user can recognize it.

In addition, in the case where the reserved task was not executed because the device was not fed for instance at the time set by the task execution reservation time, it is possible to determine this state. If determined that the reserved task has not been executed, it stores this as the error information so as to output the message indicating that the reserved task has not been executed when there is a display instruction from the user. Therefore, it is possible to prevent occurrence of a problem that the process which the user thinks already executed is left unexecuted. In this embodiment, if determined that the reserved task has not been executed, this is stored once as the error information so as to display a warning when there is the display instruction from the user. It is also possible, however, to display it (the warning) when determined that the reserved task has not been executed.

According to this embodiment, when determined that the task cannot be executed in the execution process of the reserved task (FIG. 11: step 1104), the error information is added by considering that the reserved task has failed to be executed (step 1105) . When determined that the task cannot be executed in the execution process of the reserved task, however, the task may also be executed as it becomes executable thereafter or the user may be asked to reset the reservation.

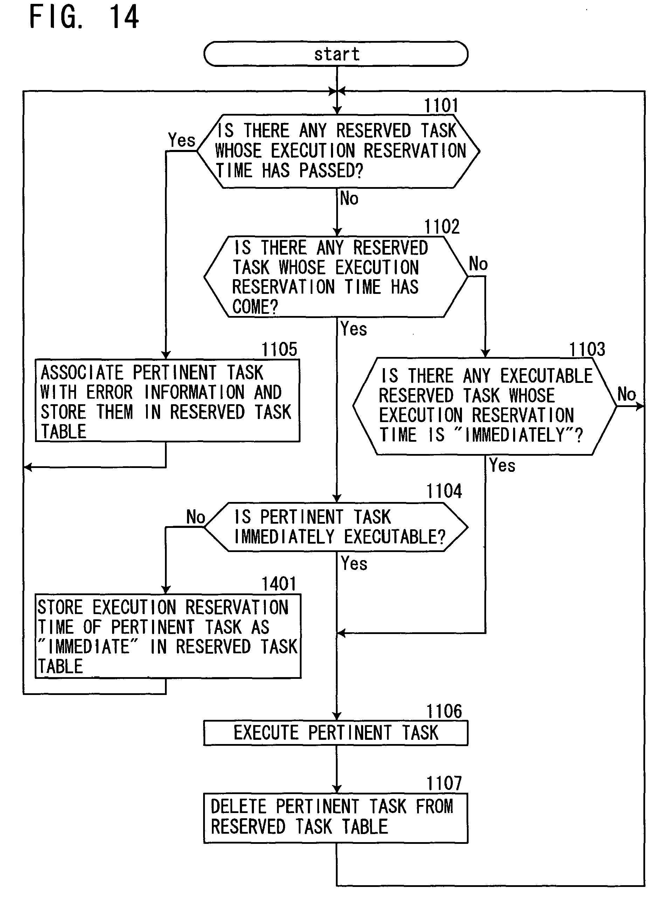

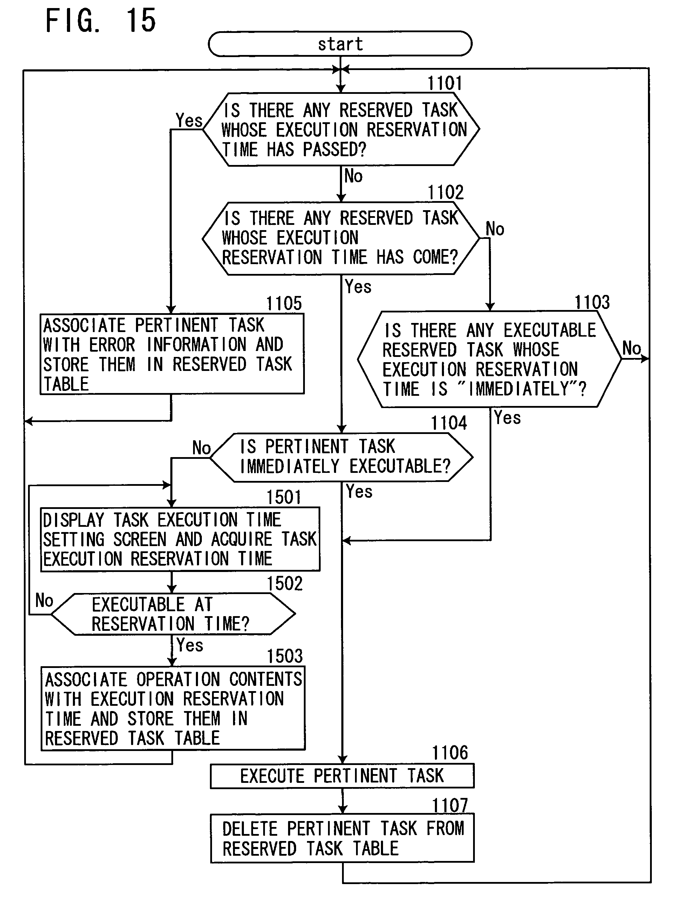

FIGS. 14 and 15 are flowcharts showing overviews of the processes of the case where "the task is executed as it becomes executable thereafter" and the case where "the user is asked to reset the reservation" respectively. The same symbols are used for those of the same process concept as FIG. 11.

FIG. 14 shows the process in which, when determined that the task cannot be executed in the execution process of the reserved task (step 1104), it stores execution reservation time information of the pertinent task as "immediate" in the reserved task table 90 (step 1401) and returns to the process of the step 1101. If the task becomes executable by releasing the processing resources, it moves on to the step 1106 by way of the step 1103 so as to automatically execute the reserved task.

FIG. 15 shows the process in which, when determined that the task cannot be executed in the execution process of the reserved task (step 1104), the user is asked to reset the reservation time by the process of the steps 1501 to 1503 (same concept as the steps 1002 to 1003 of FIG. 10).

According to the process, the user is asked to reset the task reservation or the reserved task is automatically executed after the processing resources become able to execute the reserved task. Therefore, the convenience is excellent in that, even in the case where the process has failed to be executed per reservation, the process can be executed thereafter.

This embodiment was described by using the recording and reproducing device for the DVD as a concrete example of the recording and reproducing device. However, the present invention is also effectively applicable to the recording and reproducing devices for other recording media (another optical disk medium such as a CD, a magnetic disk medium such as an HDD and a semiconductor memory for instance).

## Claims

1. An information processing device including a manipulation task reservation function, comprising:
an operating portion which is an interface to a user;
a control portion for exerting control over the entire device and the like;
a storage portion;
processing resources for executing various functions; and
an output portion,
**characterized in that** a task reservation processing portion is provided so as to perform as follows when the user makes an execution request for any of the functions to the operating portion:
in the case where the function for which the execution request has been made cannot be immediately executed because the processing resources are used for a different process from the execution request, the task reservation processing portion generates a message for seeking an instruction as to whether or not to make a task reservation for the sake of executing the function for which the execution request has been made later and outputs it from the output portion;
in the case where the instruction from the user is to make a task reservation, it associates information indicating contents of the execution request with reserved task execution time information set by a predetermined condition or acquired from the user and stores the information in the storage portion;
when a request for reference to reserved task contents is made according to the instruction to the operating portion from the user, the task reservation processing portion refers to the storage portion and obtains information on a reserved task to output it from the output portion;
in the case where there is a request for a change of the reserved task contents from the user before the reserved task is executed, it updates pertinent reserved task information of the storage portion; and
in the case where time set by the reserved task execution time information comes, it causes the reserved task to be executed.

2. The information processing device including a manipulation task reservation function according to claim 1, **characterized in that** it outputs a message for requesting resetting of a reserved task execution time from the output portion in the case where the reserved task execution time information is acquired from the user on asking the user for the instruction as to whether or not to make a task reservation and in the case where the task reservation processing portion determines that the processing resources cannot execute the reserved task at the time set by the reserved task execution time information, and it associates the reserved task execution time information with the information indicating contents of the execution request and stores the information in the storage portion in the case where valid reserved task execution time information is acquired from the user.

3. The information processing device including a manipulation task reservation function according to claim 1 or 2, **characterized in that**, in the case where the reserved task cannot be immediately executed in an execution process of the reserved task because the processing resources are used for a different process from the reserved task, it requests the user to reset the task reservation or automatically performs an execution process of the reserved task after the processing resources become capable of executing the reserved task, or stores error information in the storage portion and produces an output to the effect that the reserved task has failed to be executed when the request for reference to the reserved task contents is made by the user.

4. The information processing device including a manipulation task reservation function according to any one of claims 1 to 3, **characterized in that**:
the storage portion is composed of a nonvolatile memory; and
in the case where the execution process of the reserved task is performed, it deletes the information on the reserved task stored in the nonvolatile memory or associates the information on the reserved task with information indicating that the task has been executed and stores the information in the nonvolatile memory; and
in the case where the task reservation processing portion determines that, even though the time set by the reserved task execution time information has passed, the information on the reserved task exists in the nonvolatile memory or the information indicating that the task has been executed is not added to the information on the reserved task, it outputs a message indicating that the reserved task has not been executed from the output portion or stores that information as error information in the nonvolatile memory so as to output the message indicating that the reserved task has not been executed from the output portion when there is a display instruction from the user.

5. The information processing device including a manipulation task reservation function according to any one of claims 1 to 4, **characterized in that** it includes a recording and reproducing device for recording or reproducing the contents for an information recording medium so that the processing resources are composed of the contents recorded in the recording and reproducing device or the information recording medium, and the execution request from the user is a request for a change or deletion of content information recorded on the information recording medium.

6. A manipulation task reservation processing program for causing the information processing device according to claim 1 to execute the steps of:
when the user makes an execution request for any of the functions to the operating portion, determining whether or not the function for which the execution request has been made can be immediately executed;
when determined not to be immediately executable, generating a message for seeking an instruction as to whether or not to make a task reservation for the sake of executing the function for which the execution request has been made later and outputting it from the output portion;
in the case where the instruction from the user thereby acquired is to make a task reservation, associating information indicating contents of the execution request with reserved task execution time information set by a predetermined condition or acquired from the user and storing the information in the storage portion;
when a request for reference to reserved task contents is made according to the instruction to the operating portion from the user, referring to the storage portion and obtaining information on the reserved task to output it from the output portion;
in the case where there is a request for a change of the reserved task contents from the user before the reserved task is executed, updating pertinent reserved task information of the storage portion; and
in the case where time set by the reserved task execution time information comes, causing the reserved task to be executed.

7. A manipulation task reservation processing method for a manipulation task of an information processing device comprising:
an operating portion which is an interface to a user;
a control portion for exerting control and the like over the entire device;
a storage portion;
processing resources for executing various functions; and
an output portion,
**characterized in that**:
when the user makes an execution request for any of the functions to the operating portion, if the function for which the execution request has been made cannot be immediately executed because the processing resources are executing a different process from the execution request, it generates a message for seeking an instruction as to whether or not to make a task reservation for the sake of executing the function for which the execution request has been made later and outputs it from the output portion;
in the case where the instruction from the user is to make a task reservation, it associates information indicating contents of the execution request with reserved task execution time information set by a predetermined condition or acquired from the user and stores the information in the storage portion;
when the user makes a request for reference to reserved task contents, it refers to the storage portion and obtains information on a reserved task to output it from the output portion;
in the case where there is a request for a change of the reserved task contents from the user before the reserved task is executed, it updates pertinent reserved task information of the storage portion; and
in the case where time set by the reserved task execution time information comes, it causes the reserved task to be executed.
